# EUROPEAN PATENT SPECIFICATION

(11) **EP 0 649 698 B1**
(45) Date of publication and mention of the grant of the patent: **28.06.2000**
(21) Application number: 94913797.0
(22) Date of filing: 21.04.1994
(51) Int. Cl.: G05B 19/409

(54) **APPARATUS FOR ELECTRIC DISCHARGE MACHINING**
VORRICHTUNG ZUM ELEKTROEROSIVEN BEARBEITEN
APPAREIL D'USINAGE PAR ETINCELAGE

(30) Priority: 10.05.1993 JP 10779993
(43) Date of publication of application: 26.04.1995
(73) Proprietor: FANUC LTD., Minamitsuru-gun, Yamanashi 401-05 (JP)
(72) Inventor: KITA, Yuki, Fanuc Mansion Harimomi 10-203, Minamitsurugun, Yamanashi 401-05 (JP); ITO, Masaya, Fanuc Dai-3 Vira-karamatsu, Minamitsuru-gun, Yamanashi 401-05 (JP); YAMAGUCHI, Meguru, Fanuc Dai-3 Vira-karamatsu, Minamitsurugun, Yamanashi 401-05 (JP); SATO, Hiroshi, Fanuc Dai-1 Vira-karamatsu, Minamitsurugun, Yamanashi 401-05 (JP)
(74) Representative: Brunner, Michael John
(86) International application number: JP9400666
(87) International publication number: WO9426454

(56) References cited:
- EP-A- 0 442 059
- EP-A- 0 507 670
- EP-A- 0 623 860
- DE-A- 4 222 755
- GB-A- 2 248 124
- JP-A- 3 111 125
- JP-A- 4 189 422
- US-A- 4 378 487
- US-A- 4 980 532
- PATENT ABSTRACTS OF JAPAN vol. 16 no. 274 (M-1257) ,19 June 1992 & JP-A-04 069133 (HITACHI) 4 March 1991,
- PATENT ABSTRACTS OF JAPAN vol. 12 no. 10 (M-658) ,13 January 1988 & JP-A-62 173142 (MATSUSHITA ELECTRIC) 25 January 1987,

## Description

### TECHNICAL FIELD

The present invention relates to an electric discharge apparatus such as a wire electric discharge apparatus, engraving electric discharge apparatus and the like, and more specifically, to an electric discharge apparatus having a function for managing machining start time and machining end time.

### BACKGROUND ART

Since wire electric discharge apparatuses and engraving electric discharge apparatuses can machine a raw material which cannot be machined by usual machining and have high machining accuracy, they are widely used. On the contrary, the electric discharge apparatuses require long machining time and, for example, several tens of hours are required to machine a single piece of workpiece in not a few cases. Therefore, it is important to manage machining start time and machining end time.

For example, when machining is ended in midnight in unmanned operation, a workpiece having been machined is left as it is and sometimes rusted. Therefore, a time during which a workpiece is left must be shortened after the completion of machining. Thus the management of machining end time is important.

To cope with this problem, although there is an electric discharge apparatus in which a machining time is previously determined by calculation and a machining end time is managed based on the machining time, the machining end time is not always indicated clearly, and the management of time accompanied with machining is a vague and time-consuming job to the operator. Therefore, it cannot be the fact that machining time is properly controlled.

JP-A-4069133 discloses a machine tool which employs a machining completion time calculation. JP-A-3111125 discloses an electric discharge machining time prediction method and apparatus.

Taking the above into consideration, an object of the present invention is to provide an electric discharge apparatus capable of properly managing machining time.

To solve the above problem, according to the present invention, there is provided an electric discharge apparatus comprising:
actual machining condition determination means for determining actual machining conditions including a machining time from previously experimentally determined fundamental machining condition data and set data;
circumferential length calculation means for calculating the circumferential length of a workpiece from a machining program;
machining time calculation means for calculating a machining time from the machining speed and the circumferential length; characterised by:
the apparatus having a function for managing machining time;
time measurement means for measuring a present time;
machining end time calculation means for calculating an expected machining end time from the present time and the machining time;
display means for displaying the present time and the expected machining end time, wherein the present time and the expected machining end time are displayed in an analog clock fashion;
correlation graph creation means for creating a correlation graph showing a relationship between a machining speed and a machining accuracy in the input set data from the fundamental machining condition data and displaying the correlation graph on a display screen (31); and
indication symbol control means for creating an indication symbol to be displayed on said display screen and moving said indication symbol to a position on the correlation graph indicated by an input key, wherein said actual machining condition determination means determines the actual machining conditions including the machining speed from the fundamental machining condition data, the set data and the position indicated by the indication symbol.

In the electric discharge apparatus of the present invention, the actual machining condition determination means determines the actual machining conditions including the machining speed from the previously experimentally determined fundamental machining condition data and the set data. The circumferential length calculation means calculates the circumferential length of the workpiece from the machining program. The machining time calculation means calculates the machining time from the machining speed and the circumferential length. The time measurement means measures the present time. The machining end time calculation means calculates the expected machining end time from the present time measured by the time measurement means and the machining time determined by the machining time calculation means. The display means displays the present time and the expected machining end time in, for example, the analog clock fashion.

### BRIEF DESCRIPTION OF THE DRAWINGS

FIG. 1 is a block diagram showing a principle of the present invention;
FIG. 2 is a view schematically showing the arrangement of a wire electric discharge apparatus to which the present invention is applied;
FIG. 3 is a block diagram schematically showing the hardware of a numerical control apparatus (CNC) of the wire electric discharge apparatus to which the present invention is applied;
FIG. 4 is a view showing a first step of a machining time management method according to the present invention;
FIG. 5 is a flowchart schematically showing a processing sequence for setting actual machining conditions;
FIG. 6 is a view showing a second step of the machining time management method according to the present invention; and
FIG. 7 is a view showing another example of the second step of the machining time management method according to the present invention.

### BEST MODE OF CARRYING OUT THE INVENTION

An embodiment of the present invention will be described below with reference to the drawings.

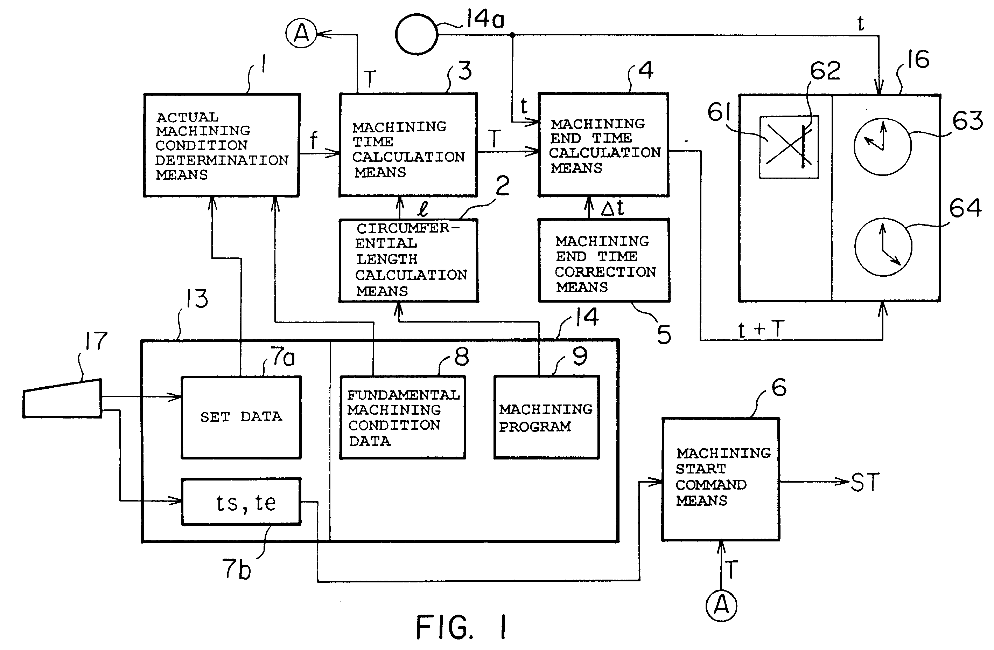

FIG. 1 is a block diagram showing a principle of the present invention. In FIG. 1, an electric discharge apparatus of the present invention is composed of actual machining condition determination means 1, circumferential length calculation means 2, machining time calculation means 3, time measurement means 14a, machining end time calculation means 4 and display unit 16. The actual machining condition determination means 1 determines actual machining conditions including a machining speed from fundamental machining condition data 8 which was previously experimentally determined and set data 7a input by the operator. Note, position data of an indicator symbol (graph cursor) 62 on a correlation graph 61 displayed on a display screen 31 may be also used together with the above as an element for determining the actual machining conditions.

The circumferential length calculation means 2 calculates the circumferential length L of a workpiece from a machining program 9, and the machining time calculation means 3 calculates a machining time T from a machining speed in the actual machining conditions and the circumferential length L. The machining end time calculation means 4 calculates an expected machining end time (t + T) from a present time t measured by the time measurement means 14a and the machining time T, and the display screen 31 displays the present time t to an analog clock 63 and the expected machining end time (t + T) to an analog clock 64.

Machining end time correction means 5 corrects the expected machining end time (t + T) in accordance with the progress of machining at each predetermined time.

Machining start command means 6 outputs a machining start command at a set machining start time ts. Further, the machining start command means 6 calculates the machining start time ts from the machining time T determined by the machining time calculation means 3 and a set machining end time te and outputs a machining start command ST at the machining start time ts.

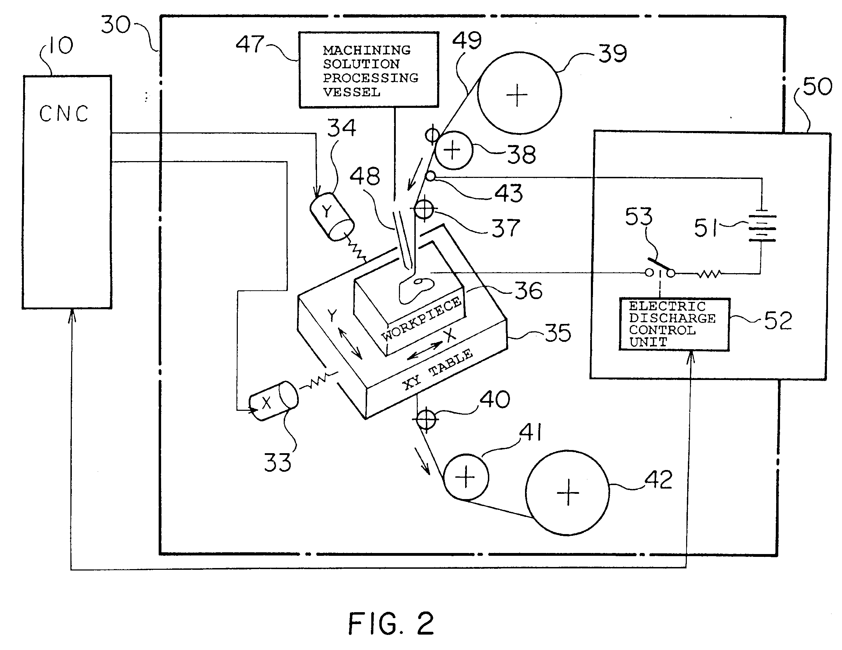

FIG. 2 is a view schematically showing the arrangement of a wire electric discharge apparatus to which the present invention is applied. In FIG. 2, the wire electric discharge apparatus is composed of a numerical control apparatus (CNC) 10 and an electric discharge machine main body 30.

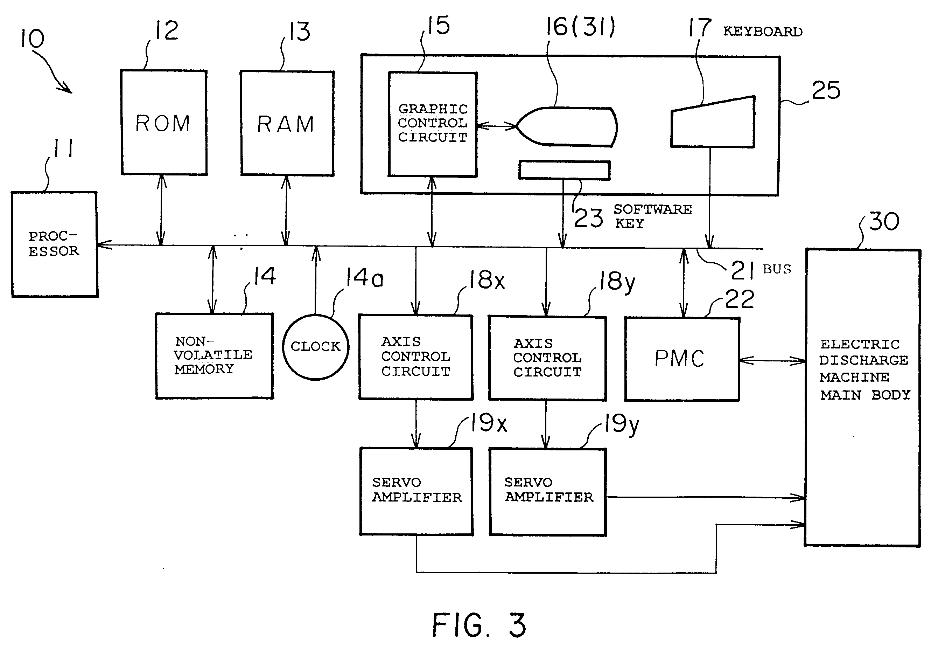

The numerical control apparatus 10 reads and decodes a machining program stored in a non-volatile memory 14 (FIG. 3) and drives an X-axis servo motor 33 and a Y-axis servo motor 34 to execute the control of the electric discharge machine main body 30 as a whole such as the movement of an XY table 35 and the like.

The XY table 35 can be moved in two orthogonal axis directions by the X-axis servo motor 33 and the Y-axis servo motor 34. A workpiece 36 composed of an electric conductive material is fixed on the XY table 35. An upper wire guide 37 and a lower wire guide 40 for holding a wire 49 are disposed above and below the XY table 35 and the workpiece 36. These upper and lower wire guides 37 and 40 are used to correctly position the wire 49 to the workpiece 36 to be machined. The wire 49 is continuously fed from a feed reel 39 and reaches the workpiece 36 through a brake 38 and the upper wire guide 37. The wire 49 having passed through the workpiece 36 passes through the XY table 35 and then is accommodated in a wire winding reel 42 through the lower wire guide 40 and a wire feed roller 41.

An electric discharge voltage is supplied from one of the terminals of a machining power supply 51 of a power supply unit 50 to the wire 49 through a power feeder 43 interposed between the upper wire guide 37 and the brake 38. On the other hand, the other terminal of the machining power supply 51 is electrically connected to the workpiece 36 through a switch 53 to be opened and closed by an electric discharge control apparatus 52. An electric discharge control unit 52 varies machining characteristics by controlling intervals of turning on/off time of a discharge current in response to an on/off signal from the numerical control apparatus 10. Further, the electric discharge control unit 52 receives a bath voltage between the wire 49 and the workpiece 36, converts the bath voltage into a digital value and supplies the digital value to the numerical control apparatus 10. The numerical control apparatus 10 controls the X-axis servo motor 33 and the Y-axis servo motor 34 so that the XY table 35 moves at a speed corresponding to the bath voltage. Further, the electric discharge control unit 52 electrically detects electrical short between the wire 49 and the workpiece 36 and supplies an electrical short detection signal to the numerical control apparatus 10. The numerical control apparatus 10 supplies a command for releasing the electric short to the electric discharge machine main body 30 in accordance with the electric short detection signal to relatively control the motion of the wire 49 by controlling the XY table 35.

A machining solution processing vessel 47 is composed of a tank, a filter unit, an ion exchanger and the like and supplies a machining solution to a portion to be machined of the workpiece from a jet nozzle 48.

As descried above, the numerical control apparatus 10 machines the workpiece by moving the XY table 35 by outputting control signals, feeding the wire 49 while supplying the machining solution from the jet nozzle 48 and causing pulse discharge between the wire 49 and the workpiece 36. When the pulse discharge is caused, the surface of the workpiece 36 is vaporized and melted so that the workpiece 36 is machined to a desired configuration.

Note, since a mechanism for controlling a position of the upper wire guide 37 to effect taper machining is not directly related to the present invention, the mechanism is not described here.

FIG. 3 is a schematic block diagram showing the hardware of the numerical control apparatus (CNC) for the wire electric discharge apparatus to which the present invention is applied.

A processor 11 controls the numerical control apparatus 10 as a whole in accordance with a system program stored in a ROM 12, which is an EPROM or EEPROM, and a program for executing a machining time control method according to the present invention. A RAM 13 is composed of an SRAM or the like, in which data such as various kinds of data, I/O signals as well as set data to be described later, a set machining start time ts, a set machining end time te and the like are stored. A non-volatile memory 14 is composed of a CMOS backed up by a battery not shown and stores parameters, fundamental machining condition data to be described later, machining programs and the like, which must be maintained operative even after a power supply is cut off. Further, the non-volatile memory 14 contains time measurement means (the clock) 14a for measuring a present time.

A graphic control circuit 15 converts digital signals into display signals and supplies these signals to the display unit 16. A CRT or liquid crystal display is used as display unit 16, and a present time, expected machining end time and the like are displayed on the display screen 31 of the display unit 16 in an analog fashion. Further, as described later, actual machining conditions are determined by the set data input by the operator according to a content displayed on the display screen 31.

Further, jobs or data capable of being accepted by the display screen 31 are displayed thereon by a menu fashion. A desired item of a menu can be selected by depressing software keys 23 disposed below the menu. A meaning of each software key 23 is varied depending upon each screen.

A keyboard 17 is composed of symbolic keys, numerical keys and the like and used for the input of the set data and indication of the movement of a cursor, and the like.

As described above, a programmable machine controller (PMC) 22 receives signals such as a bath voltage and the like from the electric discharge machine main body 30 and supplies the signals to the processor 11 through a bus 21. On receiving the bath voltage signal, the processor 11 controls the movement of the X-axis servo motor 33 and the Y-axis servo motor 34 at a speed corresponding to the signals.

On receiving an axis movement command from the processor 11, axis control circuits 18x, 18y output axis commands to servo amplifiers 19x, 19y. On receiving the movement commands, the servo amplifiers 19x, 19y drive the X-axis servo motor 33 and the Y-axis servo motor 34 of the electric discharge machine main body 30. These components are interconnected through the bus 21. Note, a plurality of the processors may be employed to constitute a multi-processor system.

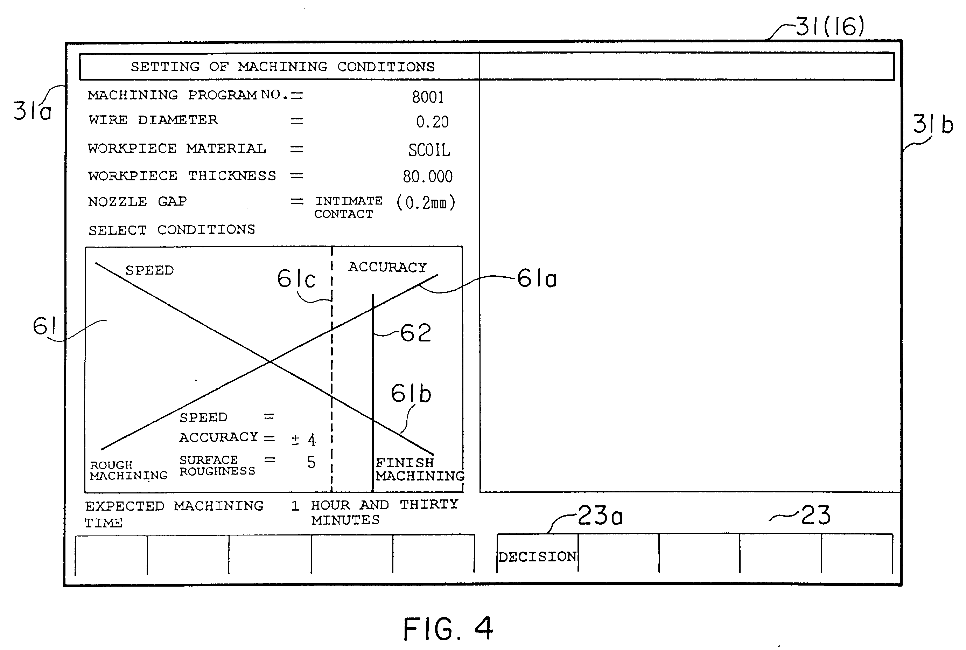

Next, the machining time management method according to the present invention will be described with reference to FIG. 4 to FIG. 7.

FIG. 4 is a view showing a first step of the machining time management method according to the present invention. In FIG. 4, the display screen 31 is a display screen provided with the numerical control apparatus 10 as described above, wherein the left column 31a of the display screen is a machining condition setting column and the right column 31b thereof is a machining time setting column. The right column 31b is not displayed at the first step, and a present time, an expected machining end time and the like are displayed to the right column 31b at a second stage to be described later in an analog clock fashion.

The operator first inputs set data according to the contents displayed on the upper portion of the left column 31a and determines actual machining conditions. That is, the operator inputs various data such as a machining program number, wire diameter, workpiece material, workpiece thickness, and nozzle gap by means of the keyboard 17 and the software key 23.

There is shown a correlation graph 61 which indicates a relative relationship between a machining speed and a machining accuracy (dimensional accuracy) on the lower portion of the left column 31a. The correlation graph 61 is created using machining speed data and machining accuracy data in various kinds of fundamental machining condition data which was previously experimentally determined. In the correlation graph 61, a graph 61a indicating the machining accuracy is shown as a graph upward to the right and a graph 61b indicating the machining speed is shown as a graph downward to the right. This means that when the machining accuracy is intended to be increased to effect finish machining, the machining speed is lowered, whereas when the machining speed is lowered to effect rough machining, the machining speed can be increased. The operator can instantly know the relative relation-ship between the machining accuracy and the machining speed by observing the correlation graph 61.

When the operator sets a cursor to a column of "select conditions" displayed to the lowermost line of the set data, the graph cursor 62 is made movable. Then, when the graph cursor 62 is moved on the correlation curve 61 using the keyboard 17, values of the machining speed and machining accuracy displayed below the correlation curve 61 are varied according to the movement of the graph cursor 62. That is, machining speeds and machining accuracy corresponding to the points on the correlation graph 61 designated by the graph cursor 62 are successively displayed.

As described above, the correlation curve 61 is created using the machining speed data and the machining accuracy data in the various kinds of the fundamental machining condition data, and the above values of the machining speed and the machining accuracy are values under the conditions set by the initially set data of the created data. Note, a value of surface roughness is also displayed simultaneously with the machining speed and the machining accuracy. The data of surface roughness is also included in the fundamental machining condition data and the value of surface roughness to be displayed is a value under the conditions indicated by the set data in the fundamental machining condition data.

The operator moves the graph cursor 62 on the correlation graph 61 until the machining speed, machining accuracy and surface roughness are set to desired values. When the operator presses the decision key 23a of the software key 23 at the time the desired values are displayed, actual machining conditions having the machining speed displayed at the time as well as capable of obtaining the machining accuracy and surface roughness displayed at the time. The actual machining conditions are determined based on the fundamental machining condition data, the set data, and the position data of the graph cursor 62. Further, when the decision key 23a is pressed, the number of machining is also determined at the same time, and the actual machining conditions are created each time of the number of the machining. The number of machining is determined according to the position of the graph cursor 62. That is, when the graph cursor 62 is located in a rough machining region on the left side of a reference line 61c in the correlation cursor 61, the number of machining is set to a time, whereas when it is located in a finish machining region on the right side thereof, the number of machining is set to two times or more. That is, as the graph cursor 62 is apart from the reference line 61c rightward, the number of machining is increased to increase the machining accuracy. A schematic processing sequence for setting the above actual machining conditions will be described below.

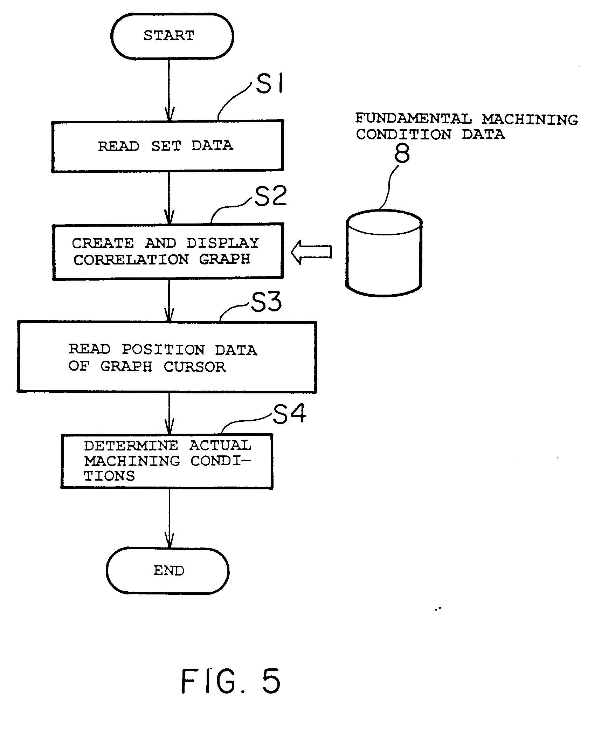

FIG. 5 is a flowchart schematically showing the processing sequence for setting the actual machining conditions. In Fig. 5, numerals prefixed with an "S" indicate the numbers of steps of the process.
[S1] Data set by the operator (respective data of a wire diameter, workpiece material, workpiece thickness, and nozzle gap) is read.
[S2] A correlation graph is created from the set data and various fundamental machining condition data and displayed on the display screen. Although the correlation graph is first given as several points, it is created as a continuous line by the interpolation of the intervals of the points.
[S3] A position of the graph cursor designated by the operator is read.
[S4] Actual machining conditions are determined from the set data, fundamental machining condition data and position data of the graph cursor.

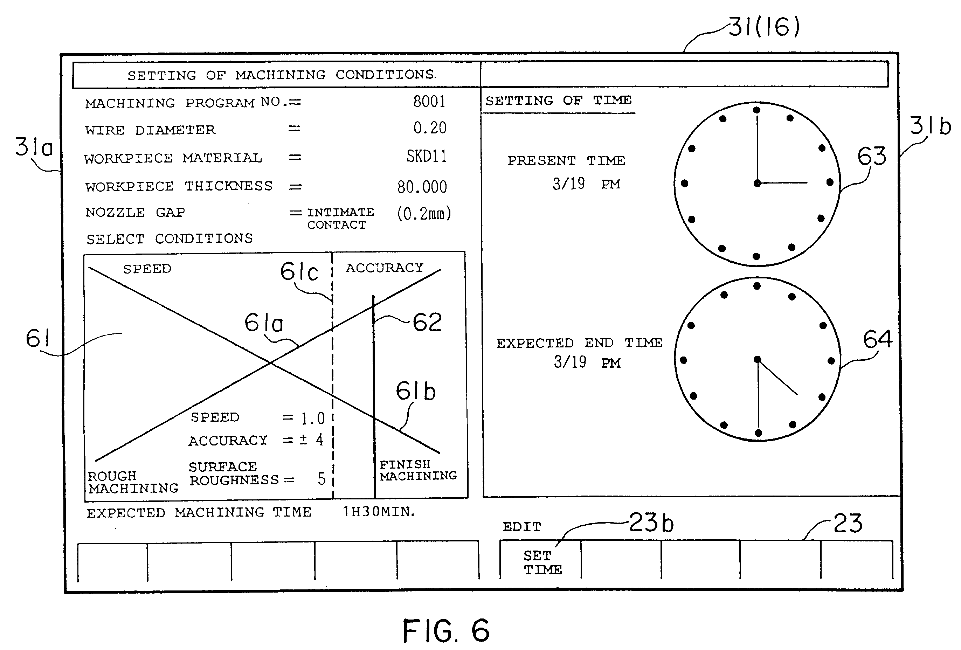

FIG. 6 is a view showing a second step of the machining time management method according to the present invention. At the second step, an expected machining time T is determined from the actual machining conditions determined at the first step and the machining program and a time is displayed in an analog clock fashion.

That is, the circumferential length L of the workpiece 36 is calculated from the configuration data of the workpiece 36, a time necessary for machining is determined using the circumferential length L and data such as the wire diameter, an amount of offset, the machining speed, the number of machining of the actual machining conditions, and the time is displayed on the lowermost line of the left column 31a of the display screen 31 as the expected machining time T. In this example, the expected machining time T is one hour and thirty minutes.

Next, when the operator presses the time setting key 23b of the software key 23, the right column 31b serves as a time display column and displays the two analog clocks 63, 64. The upper analog clock 63 displays a present time t based on the measurement of time effected by the clock 14a contained in the non-volatile memory 14. The lower analog clock 64 displays an expected machining end time (t + T) obtained by adding the expected machining time T to the present time t.

As described above, since the present time t and the expected machining end time (t + T) are displayed in the analog clock fashion, the operator can simply recognize the information only by observing the display screen 31. Thus, a machining time can be plainly and correctly managed.

Further, when the operator sets the graph cursor 62 to an arbitrary position on the correlation graph 61 and presses the decision key 23a at the first step of FIG. 4 and continuously presses the time setting key 23b at the second step of FIG. 2, a time can be displayed in the analog clock fashion in accordance with the position of the graph cursor 62 each time the operator executes the operation. Consequently, the actual machining conditions can be set after whether a machining time is proper or not is determined.

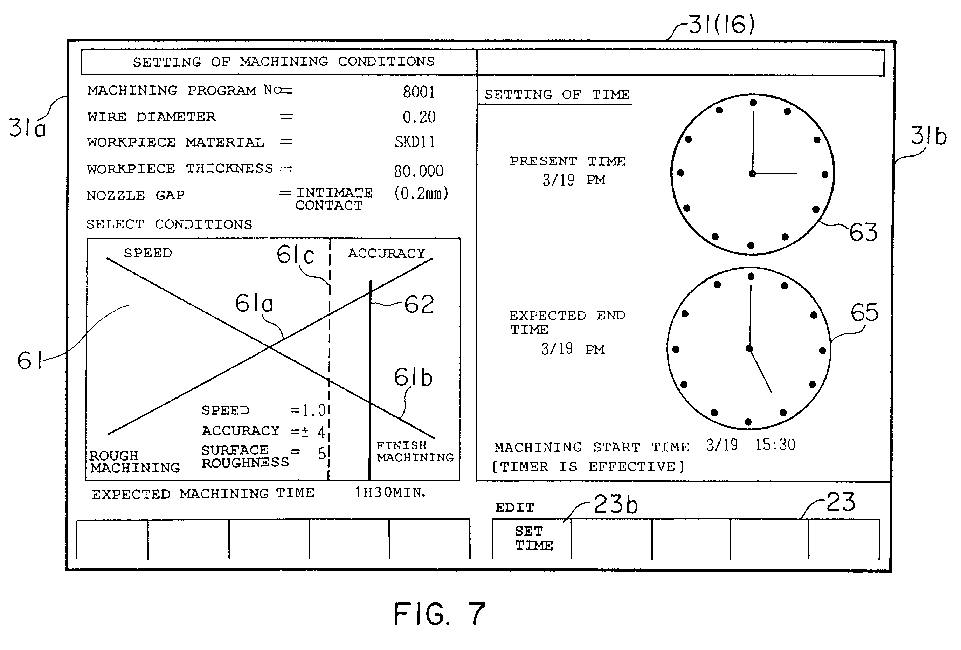

FIG. 7 is a view showing another example of the second step. In this example, the operator can set the machining start time ts and machining starts from the machining start time ts by a timer function. The machining start time ts is displayed on the lowermost line of the right column 31b. In this case, an analog clock 65 displaying the expected machining end time displays a time (ts + T) obtained by adding the expected machining time T to the machining start time ts set by the operator. For example, when the expected machining time T is one hour and thirty minutes, the present time t is PM 3:00, and the machining start time ts set by the operator is PM: 3:30, the analog clock 65 displays PM 5:00 which is a time obtained by adding the expected machining time T to the machining start time ts as the expected machining end time.

Since the timer function is provided as described above, machining can be started at any arbitrary time set by the operator. Further, since the expected machining end time is displayed based on the machining start time, a machining time can be correctly managed even if machining is started by the timer function.

Although the expected machining end time is determined by adding the expected machining time T to the machining start time ts in the above example, a machining end time te may be set first on the contrary and the machining start time ts may be determined by subtracting the expected machining time T from the set machining end time te. As described above, machining can be always ended at a desired time by setting the machining start time ts in accordance with the machining end time te set first. Consequently, when, for example, a workpiece must be promptly processed after it has been machined because the workpiece is rusted when it is left as it is, it suffices only to set the machining end time te to a time when the operator is present. The setting of the machining end time is effective to manage a machining time in unmanned operation, and the like.

Further, the expected machining end time (or the set machining end time te) displayed by the analog clock 64 or 65 may be corrected at each predetermined time in accordance with a progress of machining. That is, since an error is produced between an actual machining speed after the start of machining and the machining speed of actual machining conditions, a machining time is repredicted at each predetermined time using the actual machining speed and the expected machining end time (or the set machining end time te) is corrected in accordance with the repredicted machining time. With this arrangement, the expected machining end time (or the set machining end time te) is made more accurate, and the operator can execute a job more properly based on the information.

As described above, according to the present invention, since present time and expected machining end time are displayed on the display screen, the operator can simply recognize the information only by observing the display screen and, so that machining time can be plainly and correctly managed.

Further, since the timer function is provided, machining can start at any arbitrary time set by the operator, and since expected machining end time is displayed based on the machining start time, even if machining is started by the timer function, the machining time can be accurately managed.

Further, since the machining start time is set in accordance with set machining end time, machining can be always ended at a desired time. Therefore, when, for example, a workpiece must be promptly processed after it has been machined because the workpiece is rusted when it is left as it is, it suffices only to set the machining end time to a time when the operator is present. When this function is used, machining time can be effectively managed particularly when unmanned operation is executed.

## Claims

1. An electric discharge apparatus comprising:
actual machining condition determination means (1) for determining actual machining conditions including a machining time from previously experimentally determined fundamental machining condition data and set data;
circumferential length calculation means (2) for calculating the circumferential length of a workpiece from a machining program;
machining time calculation means (3) for calculating a machining time from the machining speed and the circumferential length; characterised by:
the apparatus having a function for managing machining time;
time measurement means (14a) for measuring a present time;
machining end time calculation means (4) for calculating an expected machining end time from the present time and the machining time;
display means (16) for displaying the present time and the expected machining end time, wherein the present time and the expected machining end time are displayed in an analog clock fashion;
correlation graph creation means for creating a correlation graph (61) showing a relationship between a machining speed and a machining accuracy in the input set data from the fundamental machining condition data and displaying the correlation graph on a display screen (31); and
indication symbol control means for creating an indication symbol (62) to be displayed on said display screen and moving said indication symbol to a position on the correlation graph indicated by an input key (23a), wherein said actual machining condition determination means determines the actual machining conditions including the machining speed from the fundamental machining condition data, the set data and the position indicated by the indication symbol.

2. An electric discharge apparatus according to claim 1, further comprising machining start command means (6) for outputting a machining start command at a set machining start time after the issue of the machining start command.

3. An electric discharge apparatus according to claim 1, wherein said display means (16) displays the expected machining end time in accordance with the position indicated the indication symbol, which is moved on the correlation graph (61) by said input key.

## Patentansprüche

1. Elektrische Entladungsvorrichtung mit:
Bestimmungsmitteln (1) für aktuelle Bearbeitungsbedingungen zum Bestimmen aktueller Bearbeitungsbedingungen, insbesondere einer Bearbeitungszeit aus zuvor experimentell bestimmten grundlegenden Bearbeitungszustandsdaten und Solldatengruppen,
Umfangslängen-Berechnungsmitteln (2) zur Berechnung der Umfangslänge eines Werkstückes aus einem Bearbeitungsprogramm,
Bearbeitungszeit-Berechnungsmitteln (3) zum Berechnen einer Bearbeitungszeit aus der Bearbeitungsgeschwindigkeit und der Umfangslänge,
gekennzeichnet durch
eine Funktion der Vorrichtung zur Verwaltung der Bearbeitungszeit,
Zeitmeßmittel (14a) zum Messen der aktuellen Zeit,
Bearbeitungsschlußzeitberechnungsmittel (4) zum Berechnen eines bearbeiteten Bearbeitungszeitschlusses aus der aktuellen Zeit und der Bearbeitungszeit,
Anzeigemittel (16) zum Anzeigen der aktuellen Zeit und der erwarteten Bearbeitungsschlußzeit, wobei die aktuelle Zeit und die erwartete Bearbeitungsschlußzeit nach Art einer analogen Uhr dargestellt werden,
Korrelationsgraph-Erzeugungsmittel zum Erzeugen eines Korrelationsgraphes (61), der einen Zusammenhang zwischen einer Bearbeitungsgeschwindigkeit und einer Bearbeitungsgüte für die eingegebenen Solldaten aus den grundlegenden Bearbeitungsbedingungsdaten zeigt und zur Anzeige des Korrelationsgraphes auf einem Bildschirm (31), und
Anzeigesymbol-Steuermittel zum Erzeugen eines Anzeigesymbols (62), das auf dem Bildschirm dargestellt werden soll, und zur Bewegung des Anzeigesymbols auf eine Stelle am Korrelationsgraph, die von einer Eingabetaste (32a) angezeigt wird, wobei die Bestimmungsmittel für aktuelle Bearbeitungsbedingungen die aktuellen Bearbeitungsbedingungen mit der Bearbeitungsgeschwindigkeit aus den grundlegenden Bearbeitungsbedingungsdaten, den Solidaten und der vom Anzeigesymbol angezeigten Stelle bestimmen.

2. Elektrische Entladungsvorrichtung nach Anspruch 1, die weiter Bearbeitungsstartbefehlsmittel (6) aufweist, um einen Bearbeitungsstartbefehl zu einer eingestellten Bearbeitungsstartzeit ausgeben, nachdem der Bearbeitungsstartbefehl abgegeben wurde.

3. Elektrische Entladungsvorrichtung nach Anspruch 1, bei der die Anzeigemittel (16) die erwartete Bearbeitungsschlußzeit entsprechend der Stelle anzeigen, auf die das Anzeigesymbol zeigt, welches von der Eingabetaste entlang des Korrelationsgraphen (61) bewegt wird.

## Revendications

1. Appareil d'électro-érosion, comportant:
un moyen (1) de détermination des conditions effectives d'usinage, pour déterminer des conditions effectives d'usinage, comprenant une durée d'usinage, à partir de données de conditions d'usinage, fondamentales, préalablement déterminées expérimentalement, et de données fixées;
un moyen (2) de calcul de la longueur périphérique, pour calculer la longueur périphérique d'une pièce à partir d'un programme d'usinage;
un moyen (3) de calcul de la durée d'usinage, pour calculer une durée d'usinage a partir de la vitesse d'usinage et de la longueur périphérique; caractérisé par:
le fait que l'appareil présente une fonction de gestion de la durée d'usinage;
un moyen (14a) de mesure du temps pour mesurer un temps présent;
un moyen (4) de calcul du temps de fin d'usinage, pour calculer un temps attendu de fin d'usinage à partir du temps présent et de la durée d'usinage;
un moyen d'affichage (16) pour afficher le temps présent et le temps attendu de fin d'usinage, dans lequel le temps présent et le temps attendu de fin d'usinage sont affichés en mode d'horloge analogique;
un moyen de création d'un diagramme de corrélation pour créer un diagramme de corrélation (61) montrant une relation entre une vitesse d'usinage et une précision d'usinage dans les données fixées introduites, à partir des données de conditions d'usinage fondamentales, et pour afficher le diagramme de corrélation sur un écran d'affichage (31); et
un moyen de commande d'un repère, pour créer un repère (62) à afficher sur le dit écran d'affichage et pour déplacer le dit repère dans une position sur le diagramme de corrélation indiquée par une touche d'introduction (23a), dans lequel le dit moyen de détermination des conditions effectives d'usinage détermine les conditions effectives d'usinage, comprenant la vitesse d'usinage, à partir des données de conditions d'usinage fondamentales, des données fixées et de la position indiquée par le repère.

2. Appareil d'électro-érosion selon la revendication 1, comprenant en outre un moyen (6) de commande du début de l'usinage, pour délivrer un ordre de début d'usinage à un instant de début d'usinage fixé après la délivrance de l'ordre de début d'usinage.

3. Appareil d'électro-érosion selon la revendication 1, dans lequel le dit moyen d'affichage (16) affiche l'instant attendu de la fin de l'usinage en accord avec la position indiquée par le repère, qui est déplacé sur le diagramme de corrélation (61) par la dite touche d'introduction.
